# EUROPEAN PATENT APPLICATION

(11) **EP 3 192 617 A1**
(43) Date of publication of application: **19.07.2017**
(21) Application number: 16382010.3
(22) Date of filing: 12.01.2016
(51) Int. Cl.: B25J 9/16

(54) **AUTONOMOUS SCREWING ROBOT**

(71) Applicant: Airbus Operations, S.L., 28906 Getafe (Madrid) (ES)
(72) Inventor: CRISTINO, Roberto, 28906 Getafe (Madrid) (ES); LÓPEZ DE HONTANAR RODRIGO, Oscar, 28906 Getafe (Madrid) (ES); TORRIJOS SÁNCHEZ MUÑOZ, Jorge, 28906 Getafe (Madrid) (ES); FERNÁNDEZ LÓPEZ, Jose Antonio, 28906 Getafe (Madrid) (ES); GIL RUIZ, Manuel, 28906 Getafe (Madrid) (ES); SECADES RIESTRA, Ignacio, 28906 Getafe (Madrid) (ES)
(74) Representative: Carpintero Lopez, Francisco

(57) **Abstract**

The invention refers to an autonomous screwing robot comprising: an automated guided vehicle (2), a robotic arm (4) mounted in the automated guided vehicle (2), an automated screwing device (5) assembled with the robotic arm (4), a screws feeding system (8) mounted in the automated guided vehicle (2), a vision system (6) assembled with the robotic arm (4) and adapted to capture images of a working area for the screwing device, and an images recognition system. The guided vehicle (2) is programmed to move following a predefined path, and to stop at several static working positions within that path. The robotic arm is adapted to align the axis of the screwing device with the axis of a target hole guided by the images recognition system. The screwing machine is capable of screwing a large number of screws, into large static pieces, and it is specially adapted for its use in the aeronautical industry.

## Description

### Object of the invention

The present invention refers to the manufacture of aircraft large structures which require screwing operations.

An object of the invention is to provide an screwing machine capable of autonomously screwing a large number of screws, namely more than a 1000, into large static pieces, like, leading edges, trailing edge covers, outboard tips etc.

### Background of the invention

Screwing robots conventionally include an articulated arm fitted at its head with a screwing device, which carries out automatically the screwing process. The robot and the screwing device have drives of their own and controls of their own, such they operate automatically in accordance with a programmed sequence. A screwing robot of this type is described in the patent publication US-2014135987 (A1).

Screwing robots are mainly used in automobile assembling lines, wherein several robots are fixed in statics positions at both sides of the assembly line, and carry out the screwing operation in specific areas of an automobile while the automobile moves continuously alone the assembling line. Usually, a reduced number of screws are applied to each automobile in each working station of the assembly line.

However, in the aeronautical industry they are no dynamic assembly lines like in the automobile industry, instead, the piece under construction remains static in a working station until all the process of that station are completed, and then the piece is moved to the working next station. Due to the size of some aircrafts parts, like wings, fuselage sections, stabilizers etc. the working area of a piece is out of range of most of the available robots in the market. Therefore, in the aeronautical industry some screwing works are carried out manually, because they are no specific equipments adapted for screwing large static pieces.

Hand-pneumatic screwdrivers are used by the operators, but still they need to manually place every screw in the respective hole and screw it properly. Taking into account that some large aircraft pieces need more than a thousand screwed joints, these screwing operations are time-consuming and significantly increase manufacturing costs.

On the other hand, electric screwdrivers incorporating automatic screws feeding system are also know, as for example those described in the German patent publications DE-10111979, and DE-102012217474.

### Summary of the invention

The present invention is defined in the attached independent claim and it overcomes the above-mentioned drawbacks of the prior art, by providing a screwing robot capable of autonomously screwing more than thousand screwed joints in large pieces.

Therefore, an aspect of the invention refers to an autonomous screwing robot comprising a robotic arm mounted in the automated guided vehicle, such the robotic arm and the automated guided vehicle operate in a coordinated manner. The limited range of the robotic arm, is extended by the incorporation of the guided vehicle.

The automated guided vehicle is programmed to move following a predefined path, and to stop at several static working positions within that path. For example, the automated guided vehicle is programmed to move around a wing, a vertical or horizontal stabilizer of an aircraft under construction, and to stop at static working positions for the robotic arm to operate within its range.

The coordination between both devices means that the robotic arm operates when the vehicle has arrived at a static working position, and that the vehicle moves to the next working position when the robotic arm has completed the screwing process for that specific working position.

The robotic arm is fitted at its end member with a tool, in this case with an automated screwing device which is capable of screwing a screw into a hole automatically.

The robotic arm is programmed to position the screwing device at several predefined screwing positions for each static working position, in correspondence with the holes of the piece to be screwed.

To feed the screwing device with screws, a screws feeding system is mounted in the automated guided vehicle, to supply screws in a coordinated manner with the screwing device.

The operation of the automated screwing device and the screws feeding system, is known to the skilled person, thus, it is not necessary to explain in more detail how these two devices work.

Additionally, a vision system is assembled with the robotic arm, and it is adapted to capture images of a working area for the screwing device. Furthermore, an images recognition system is associated with the vision system and operatively communicated with the robotic arm.

This recognition system is adapted to identify target holes in the images captured by the vision system, and the robotic arm is further adapted to align the axis of the screwing device with the axis of a target hole guided by the images recognition system.

Due to the combination of features of the invention, screwing operations of a large piece such as an aircraft wing, can be carried out with only one robot and without participation of human operators, except for programming the guided vehicle and the robotic arm.

Some advantages of the invention can be summarized as follows:
- Low cost solution to automate screwing operations in large static pieces
- Reduction of recurrent costs
- Improved quality due to traceability and control of screwing parameters
- Ergonomics issues reduction

The skilled person in the art would easily understand that the autonomous robot of the invention could also serve to carry out similar tasks, such as riveting operation, quality inspection etc.

### Brief description of the drawings

Preferred embodiments of the invention are henceforth described with reference to the accompanying drawings, wherein:
Figure 1.- shows a perspective view of a screwing robot according to the invention.
Figure 2.- shows a perspective view of an horizontal tail plane under construction, and a screwing robot according to the invention performing the screwing operation. The figure also illustrates the traditional manual screwing process of the prior art, performed by human operators.

### Preferred embodiment of the invention

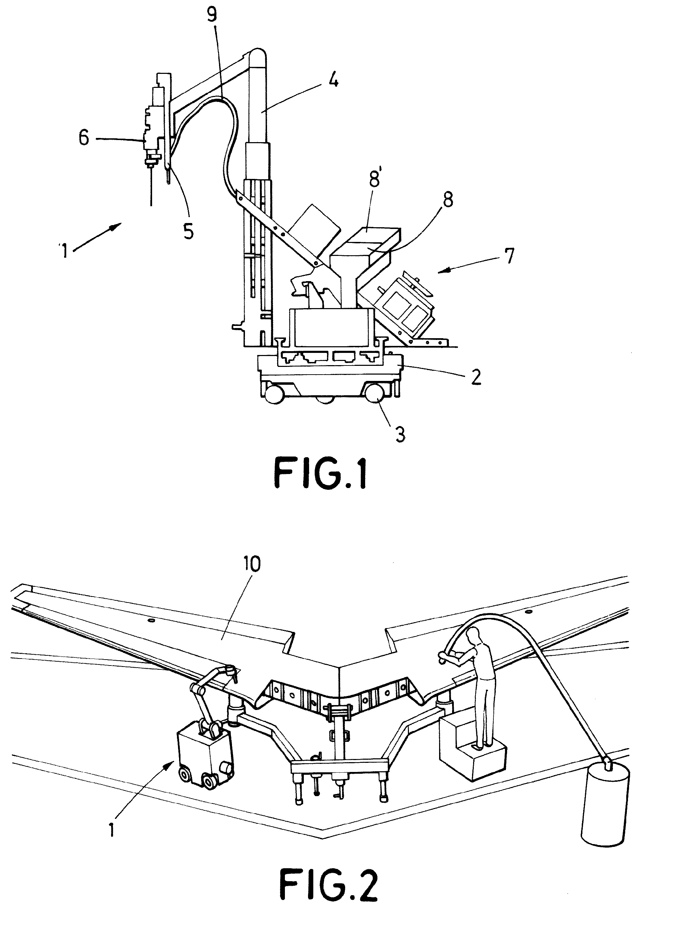

Figure 1 shows an autonomous screwing robot (1) formed by an automated guided vehicle (2) provided with wheels (3) and a robotic arm (4) mounted in the automated guided vehicle (2), and an automated screwing device (5) and a vision system (6) both assembled with the robotic arm (4).

A screws feeding system (7) is mounted in the automated guided vehicle (2), to automatically feeds screws to the screwing device (5). For that, the screws feeding system (7) has at least one container (8) for the screws, a vibrator selector to ensure that the screws are positioned correctly, a tube (9) connected with the screwing device (5), and blowing system (not shown), such by means of a blowing system (not shown) screws are transported from the container (8) to the screwing device (5) in a manner already known in the prior art. Alternatively, there can be two or more containers (8,8'), each one for a specific type of screws, which can operate associated with a screws selector.

The automated screwing device (5) is an electric device adapted to receive screws from the feeding system (7) and to screw them automatically. An interferometer is used to control screwing parameters, such as torque and turn angle.

Figure 2 shows a horizontal tail plane (HTP) (10) to which some components like leading edges and trailing edge covers, are conventionally screwed. The robot (1) of the invention is programmed to move around the HTP, and bring the robotic arm (4) to several static working positions like the one shown in figure 1, to perform screwing operations within its working range. Since the robotic arm cannot reach the entire working area of the HTP, the vehicle (2) moves the robotic arm (4) to several static positions around the HTP, so that only one robotic arm can reach the entire area of a piece to be screwed.

Preferably, the robotic arm is a collaborative robot, which means that it is provided with security means so as it is capable to work safely in the same space than human operators, without need to be isolated.

As per the vision system (6), this is mounted with the robotic arm (4) in a proper position to capture images of a working area for the screwing device (5). The vision system (6) is associated with an images recognition system (not shown) in turn operatively communicated with the robotic arm (4), and adapted to identify target holes in the images captured by the vision system.

The screwing device (5) is first positioned using a coordinates system to screw a hole in a known position in that coordinates system. Once the screwing device (5) is properly positioned, an images recognition system will identify holes inside an area for example of 50x50 mm2, and it would calculate hole parameters such as hole centre and the normal direction. Then, these parameters are used by the robotic arm, to perfectly align the axis of the screwing device with the axis of a target hole, to ensure the best performance of the operation.

Preferably, the screwing robot (1) has processing means to provide a report containing compliance data of the screwing process and the position of all the screws applied by the robot. That report, provides data such as: applied torque, number of turns, high of the screws head, etc., such as the processing means based on those parameters, can determine whether each screw has been correctly screwed or not.

## Claims

1. Autonomous screwing robot comprising:
an automated guided vehicle programmed to move following a predefined path, and to stop at several static working positions within that path,
a robotic arm mounted in the automated guided vehicle, and operatively coordinated with the automated guided vehicle,
an automated screwing device assembled with the robotic arm, wherein the robotic arm is programmed to position the screwing device at several predefined screwing positions for each static working position,
a screws feeding system mounted in the automated guided vehicle, and adapted to feed screws to the screwing device,
a vision system assembled with the robotic arm, and adapted to capture images of a working area for the screwing device,
an images recognition system operatively communicated with the robotic arm, and adapted to identify target holes in the images captured by the vision system,
and wherein the robotic arm is further adapted to align the axis of the screwing device with the axis of a target hole guided by the images recognition system.

2. Screwing robot according to claim 1, screws feeding system comprises a container, a tube connected with the screwing device and a blowing system, adapted to transport screws from the container to the screwing device trough the tube.

3. Screwing robot according to claim 1 or 2, wherein the images recognition system is adapted to calculate the hole axis and normal direction of a target hole.

4. Screwing robot according to any of the preceding claims, wherein the robotic arm is a collaborative robotic arm.
